# EUROPÄISCHE PATENTSCHRIFT

(11) **EP 1 901 950 B1**
(45) Veröffentlichungstag und Bekanntmachung des Hinweises auf die Patenterteilung: **15.06.2016**
(21) Anmeldenummer: 06764085.4
(22) Anmeldetag: 06.07.2006
(51) Int. Cl.: B60T 13/22

(54) **VERFAHREN ZUM LÖSEN VON MINDESTENS EINER MITTELS EINES DRUCKMITTELS BETÄTIGBAREN FEDERSPEICHER-BREMSE SOWIE VORRICHTUNG UND HYDRAULISCHE SCHALTUNG ZUR DURCHFÜHRUNG DES VERFAHRENS**
PROCESS FOR RELEASING OF AT LEAST ONE SPRING-LOADED BRAKE BY MEANS OF A PRESSURE MEANS AS WELL AS DEVICE AND HYDRAULIC CONTROL CIRCUIT FOR THE EXECUTION OF THE PROCESS
PROCÉDÉ DE DESSERRAGE D'AU MOINS UN FREIN À RESSORT PAR L'INTERMÉDIAIRE DE MOYENS DE PRESSION, AINSI QUE DISPOSITIF ET CIRCUIT DE CONTRÔLE HYDRAULIQUE POUR L'EXÉCUTION DUDIT PROCÉDÉ

(30) Priorität: 08.07.2005 EP 05106281
(43) Veröffentlichungstag der Anmeldung: 26.03.2008
(73) Patentinhaber: FSP Fluid Systems Partners Holding AG, 6340 Baar (CH)
(72) Erfinder: ROCCA, Wolfgang, CH-D-76297 Stutensee (CH); CHRIST, Herrmann, D-56288 Bubach (DE)
(74) Vertreter: Felber, Josef
(86) Internationale Anmeldenummer: PCT/EP2006/063937
(87) Internationale Veröffentlichungsnummer: WO 2007/006709

(56) Entgegenhaltungen:
- US-A- 4 119 355
- US-A- 4 307 917
- US-A1- 2003 155 807

## Beschreibung

Die Erfindung betrifft ein Verfahren zum Lösen von mindestens einer mittels eines Druckmittels betätigbaren Federspeicher-Bremse, wobei die mindestens eine Bremse im Normalbetrieb an einen Bremslösedruck-Versorgungskreis angeschlossen ist zur Beaufschlagung der Bremse mit einem Bremslösedruck, und wobei die Bremse im Servicebetrieb bei Ausfall des Bremslösedruckes vom Bremslösedruck-Versorgungskreis abgetrennt und mittels einer Druckmittelquelle entgegen der Federkraft des Federspeichers gelöst wird. Außerdem betrifft die Erfindung eine Vorrichtung sowie eine hydraulische Schaltung zur Durchführung des Verfahrens.

Federspeicher-Bremsen kommen unter anderem bei fahrbaren Arbeitsmaschinen zum Beispiel als Hilfs-, Feststell-, Not- oder Parkbremsen zum Einsatz, beispielsweise bei fahrbaren Baumaschinen mit hydrostatischem Fahrantrieb. Im Normalbetrieb wird die mindestens eine Federspeicher-Bremse zum Lösen mit unter Druck gesetztem Druckmittel, insbesondere mit Hydraulikflüssigkeit, beaufschlagt. Beispielsweise zum Parken der Arbeitsmaschine kann die Federspeicher-Bremse mittels eines Steuerventils mit einem Vorratstank für das Druckmittel verbunden werden, so daß das Druckmittel abfließt und die Bremse unter der Wirkung ihres Federspeichers ein oder mehrere zugeordnete Räder der Arbeitsmaschine zuverlässig arretiert. Zum Lösen muß die Bremse anschließend wieder mit Druckmittel beaufschlagt werden. Kommt es bei einer Störung beispielsweise aufgrund eines Ausfalls des Antriebs der Arbeitsmaschine zu einem Ausfall des Bremslösedruckes, so nimmt die Federspeicher-Bremse selbsttätig ihre Bremsstellung ein. Die Arbeitsmaschine muß dann jedoch innerhalb kurzer Zeit abgeschleppt werden können. Hierzu ist es erforderlich, daß die Bremse gelöst wird. Zu diesem Zweck ist es bekannt, die Verbindung der Bremse zum Steuerventil des Bremslösedruck-Versorgungskreises zu unterbrechen und die Bremse anschließend aus einer separaten Druckmittelquelle mit Druckmittel zu beaufschlagen, so daß die Bremse gelöst werden kann. Die Arbeitsmaschine kann dann zur Instandsetzung abgeschleppt werden.

Die Unterbrechung der Strömungsverbindung zwischen der Federspeicher-Bremse und dem Steuerventil erfolgt üblicherweise mittels eines manuell betätigbaren Absperrelements, das in einer Verbindungsleitung zwischen dem Steuerventil und der Federspeicher-Bremse angeordnet ist. Durch Schließen des Absperrelementes wird die Verbindung zwischen Steuerventil und Federspeicher-Bremse unterbrochen. Dies stellt sicher, daß die Bremse im Servicebetrieb mit Druckmittel beaufschlagt werden kann, ohne daß die Gefahr besteht, daß das Druckmittel über das Steuerventil in den Vorratstank gelangt. Nach dem Abschleppen der Arbeitsmaschine muß das Absperrelement zurückgestellt werden, um die Verbindung zwischen der Federspeicher-Bremse und dem Steuerventil wieder freizugeben, da ansonsten eine Steuerung der Federspeicher-Bremse über das Steuerventil beispielsweise zum Parken der Arbeitsmaschine nicht möglich ist. Beim normalen Betrieb der Arbeitsmaschine ist nicht unbedingt zu erkennen, ob das Steuerventil und damit auch die Parkbremse vom Absperrelement außer Kraft gesetzt wurden, da bei laufendem Antriebsmotor die Arbeitsmaschine zum Beispiel hydrostatisch gebremst wird und somit eine Betätigung der Parkbremse nicht erforderlich ist. Wird nach Beendigung des Abschleppvorgangs die Strömungsverbindung zwischen der Federspeicher-Bremse und dem Steuerventil nicht wieder hergestellt, so kann dies schwere Unfälle zur Folge haben, da die Parkbremse dauerhaft außer Kraft gesetzt ist. Es kann beispielsweise der Fall auftreten, daß die wieder instandgesetzte Arbeitsmaschine im Gefälle geparkt wird. Sobald die Betriebsbremse nicht mehr aktiv ist, kann sich die Arbeitsmaschine mangels wirksamer Parkbremse unkontrolliert und unaufhaltsam in Gang setzen.

Ein Verfahren zum Lösen einer mittels eines Druckmittels betätigbaren Federspeicherbremse wird in US 4 307 917 A offenbart.

Die Aufgabe der vorliegenden Erfindung ist es, ein Verfahren der eingangs genannten Art derart weiterzubilden, daß die Gefahr eines Unfalls nach einem Ausfall des Bremslösedruckes vermindert wird.

Diese Aufgabe wird bei einem Verfahren der gattungsgemäßen Art erfindungsgemäß dadurch gelöst, daß die mindestens eine Federspeicher-Bremse bei erneuter Bereitstellung des Bremslösedruckes selbsttätig wieder mit dem Bremslösedruck-Versorgungskreis verbunden wird.

Wird die Arbeitsmaschine nach einem Ausfall des Bremslösedruckes instand gesetzt, so baut sich im Bremslösedruck-Versorgungskreis wieder ein Bremslösedruck auf. Dies hat beim erfindungsgemäßen Verfahren zur Folge, daß die mindestens eine Federspeicher-Bremse selbsttätig wieder mit dem Bremslösedruck-Versorgungskreis verbunden wird. Es erfolgt also beim erfindungsgemäßen Verfahren eine selbsttätige Rücksetzung der Bremsanlage in den ursprünglichen Betriebszustand, der vor Ausfall des Bremslösedruckes vorgelegen hat. Ein manuelles Zurücksetzen der Bremsanlage in den ursprünglichen Betriebszustand ist nicht erforderlich. Die Betriebssicherheit kann somit deutlich erhöht und folgenschwere Unfälle können verhindert werden. Bei Ausfall des Bremslösedruckes kann in üblicher Weise die Verbindung zwischen der mindestens einen Federspeicher-Bremse und dem Steuerventil des Bremslösedruck-Versorgungskreises unterbrochen werden, um die Bremse mittels einer separaten Druckmittelquelle entgegen der Federkraft des Federspeichers zu lösen. Stellt sich nach einer Instandsetzung wieder der Bremslösedruck ein, so wird die Verbindung zwischen der Bremse und dem Steuerventil des Bremslösedruck-Versorgungskreises selbsttätig wieder hergestellt, so daß die Bremse zum Arretieren der Arbeitsmaschine wieder zur Verfügung steht.

Von Vorteil ist es, wenn die mindestens eine Bremse über ein Schaltorgan an den Bremslösedruck-Versorgungskreis angeschlossen wird, wobei das Schaltorgan eine erste Schaltstellung, in der die mindestens eine Bremse mit dem Bremslösedruck-Versorgungskreis verbunden ist, und eine zweite Schaltstellung, in der die mindestens eine Bremse vom Bremslösedruck-Versorgungskreis abgetrennt ist, aufweist, und wobei das Schaltorgan im Servicebetrieb in die zweite Schaltstellung überführt wird und in Abhängigkeit von dem im Bremslösedruck-Versorgungskreis herrschenden Druck selbsttätig in die erste Schaltstellung zurückgesetzt wird.

Hierbei kann vorgesehen sein, daß das Schaltorgan im Servicebetrieb manuell in die zweite Schaltstellung überführt wird. Im Falle eines Ausfalles des Bremslösedruckes kann somit mit Hilfe des Schaltorgans die Verbindung zwischen der mindestens einen Bremse und dem Steuerventil des Bremslösedruck-Versorgungskreises manuell unterbrochen werden, so daß die Bremse anschließend mittels einer separaten Druckmittelquelle entgegen der Federkraft des Federspeichers gelöst werden kann. Steht der Bremslösedruck wieder zur Verfügung, so wird das Schaltorgan selbsttätig wieder in seine erste Schaltstellung zurückgesetzt und folglich die mindestens eine Bremse wieder mit dem Steuerventil des Bremslösedruck-Versorgungskreises verbunden.

Als Schaltorgan wird vorzugsweise ein hydraulisch rückstellbares Wegeventil verwendet. Dies hat den Vorteil, daß ein Steuereingang des Schaltorgans direkt mit dem Bremslösedruck des Bremslösedruck-Versorgungskreises beaufschlagt werden kann zur Rückstellung des Schaltorgans in seine erste Schaltstellung. Die Gefahr, daß das Schaltorgan irrtümlich oder bei einer Sabotage bewußt in seine zweite Schaltstellung überführt wird, obwohl vom Bremslösedruck-Versorgungskreis der Bremslösedruck bereitgestellt wird, wird dadurch deutlich verringert, denn eine manuelle Betätigung des Schaltorgans muß dann entgegen der Wirkung des Bremslösedrucks erfolgen, der am Steuereingang des Schaltorgans anliegt, und das Schaltorgan muß gegen die Wirkung des Bremslösedruckes gehalten werden.

Die Erfindung betrifft auch eine Vorrichtung zum Lösen von mindestens einer mittels eines Druckmittels betätigbaren Federspeicher-Bremse, mit einem Schaltorgan, über das die mindestens eine Bremse zur Beaufschlagung mit einem Bremslösedruck an einen Bremslösedruck-Versorgungskreis anschließbar ist, wobei das Schaltorgan eine erste Schaltstellung, in der die mindestens eine Bremse mit dem Bremslösedruck-Versorgungskreis verbindbar ist, und eine zweite Schaltstellung, in der die mindestens eine Bremse vom Bremslösedruck-Versorgungskreis abtrennbar ist, aufweist, insbesondere zur Durchführung des voranstehend erläuterten Verfahrens.

Um eine derartige Vorrichtung in der Weise weiterzubilden, daß die Gefahr eines Unfalls bei Ausfall des Bremslösedruckes vermindert wird, wird erfindungsgemäß vorgeschlagen, daß das Schaltorgan in Abhängigkeit von dem im Bremslösedruck-Versorgungskreis herrschenden Druck selbsttätig aus der zweiten Schaltstellung in die erste Schaltstellung zurücksetzbar ist.

Wie bereits erwähnt, hat die selbsttätige Rücksetzung des Schaltorgans zur Folge, daß bei erneuter Bereitstellung des Bremslösedruckes die mindestens eine Federspeicher-Bremse automatisch wieder mit dem Bremslösedruck-Versorgungskreis verbunden wird, ohne daß hierzu eine manuelle Betätigung des Schaltorgans erforderlich ist.

Es kann vorgesehen sein, daß das Schaltorgan mittels einer Hilfseinrichtung aus seiner ersten Schaltstellung in seine zweite Schaltstellung überführbar ist. Von Vorteil ist es jedoch, wenn das Schaltorgan manuell von der ersten in die zweite Schaltstellung überführbar ist, denn dadurch wird die Handhabung der Vorrichtung zum Lösen der Federspeicher-Bremse vereinfacht. Von Vorteil ist es, wenn das Schaltorgan hydraulisch aus der zweiten Schaltstellung in die erste Schaltstellung rückstellbar ist. Die Rückstellung des Schaltorgans kann bei einer derartigen Ausgestaltung unmittelbar durch den im Bremslösedruck-Versorgungskreis herrschenden Druck erfolgen, zusätzliche Druckwandler, über die beispielsweise eine elektrische Betätigung des Schaltorgans ermöglicht wird, können dadurch entfallen. Bei einer besonders kostengünstig herstellbaren Ausführungsform der erfindungsgemäßen Vorrichtung ist das Schaltorgan als manuell betätigbares und hydraulisch rückstellbares Wegeventil ausgestaltet, insbesondere in der Form eines 2/2-Sperrventils mit hydraulischer Rücksetzung. Das Sperrventil gibt in seiner ersten Schaltstellung die Verbindung zwischen der mindestens einen Federspeicher-Bremse und dem Bremslösedruck-Versorgungskreis frei, wohingegen es in seiner zweiten Schaltstellung die genannte Verbindung unterbricht. Es kann manuell beispielsweise mittels eines Stößels oder Schiebers aus seiner ersten in seine zweite Schaltstellung überführt werden und wird in Abhängigkeit von dem im Bremslösedruck-Versorgungskreis herrschenden Druck selbsttätig aus seiner zweiten Schaltstellung in seine erste Schaltstellung zurückgesetzt.

Bei einer bevorzugten Ausführungsform weist die Vorrichtung einen Druckeinlaß zum Anschluß an das Steuerventil des Bremslösedruck-Versorgungskreises und einen Druckauslaß zum Anschluß an die mindestens eine Federspeicher-Bremse auf, wobei der Druckeinlaß über einen Verbindungskanal mit dem Druckauslaß verbunden ist und in den Verbindungskanal das Schaltorgan geschaltet ist, und außerdem weist die Vorrichtung einen Steuereinlaß auf, der mit einem Steuereingang des Schaltorgans verbunden ist und mit dem Bremslösedruck beaufschlagbar ist. Im normalen Betrieb kann der mindestens einen Bremse über den Verbindungskanal Druckmittel aus dem Bremslösedruck-Versorgungskreis zugeführt werden zum Lösen der Bremse. Hierzu nimmt das Schaltorgan seine erste Schaltstellung ein und sowohl der Druckeinlaß als auch der Steuereinlaß werden mit dem vom Bremslösedruck-Versorgungskreis bereitgestellten Bremslösedruck beaufschlagt. Kommt es bei einer Störung zu einem Ausfall des Bremslösedruckes, so kann das Schaltorgan in seine zweite Schaltstellung überführt und die mindestens eine Federspeicher-Bremse kann mittels einer externen Druckmittelquelle gelöst werden. Liegt der Bremslösedruck wieder vor, so liegt dieser auch am Steuereinlaß an, so daß das Schaltorgan selbsttätig in seine erste Schaltstellung zurückgesetzt wird.

Bevorzugt umfaßt die Vorrichtung einen Zufuhrkanal, wobei im Falle eines Servicebetriebs die mindestens eine Bremse über den Zufuhrkanal mit der Druckmittelquelle verbindbar ist. Die erfindungsgemäße Vorrichtung weist bei einer derartigen Ausgestaltung also nicht nur die Funktion auf, die Verbindung zwischen der mindestens einen Federspeicher-Bremse und dem Bremslösedruck-Versorgungskreis in Abhängigkeit von dem im Bremslösedruck-Versorgungskreis herrschenden Druck bereitzustellen, sondern sie übernimmt zusätzlich die Funktion einer Zuführung von Druckmittel zum Lösen der mindestens einen Bremse bei Ausfall des Bremslösedruckes.

Günstig ist es hierbei, wenn der Zufuhrkanal im Bereich zwischen dem Schaltorgan und dem Druckauslaß in den Verbindungskanal einmündet. Dies hat den Vorteil, daß auch bei einem Bremslösedruckausfall der mindestens einen Bremse über den Druckauslaß der Vorrichtung ein Druckmittel zum Lösen bereitgestellt werden kann. Ein separater Auslaß für das bei Ausfall des Bremslösedruckes bereitgestellte Druckmittel kann dadurch entfallen.

Als Druckmittelquelle, die bei Ausfall des Bremslösedruckes das zum Belüften der mindestens einen Bremse erforderliche Druckmittel bereitstellt, kann beispielsweise ein externer Druckspeicher oder auch eine externe Druckmittelpumpe zum Einsatz kommen. Von besonderem Vorteil ist es jedoch, wenn die erfindungsgemäße Vorrichtung die Druckmittelquelle umfaßt, denn dadurch kann der Schaltungsaufwand für die gesamte Bremsanlage verringert werden. Vorzugsweise ist die Druckmittelquelle manuell betätigbar, denn dadurch können zusätzliche Antriebselemente zum Lösen der Bremse im Servicebetrieb entfallen.

Bei einer bevorzugten Ausführungsform umfaßt die Vorrichtung einen Tankanschluß zum Anschluß an einen Druckmittelvorratstank, wobei sich an den Tankanschluß der Zufuhrkanal anschließt und in den Zufuhrkanal die Druckmittelquelle in Form einer Hilfspumpe geschaltet ist. Dies ermöglicht es, die erfindungsgemäße Vorrichtung als kompakte Baueinheit auszugestalten. Um zu vermeiden, daß mittels der Hilfspumpe das Druckmittel unter einen unzulässig hohen Druck gesetzt wird, ist es vorteilhaft, wenn parallel zur Hilfspumpe ein Druckbegrenzungsglied geschaltet ist, insbesondere ein Druckbegrenzungsventil.

Die Erfindung betrifft außerdem eine hydraulische Schaltung zum Lösen von mindestens einer mittels eines Druckmittels betätigbaren Federspeicher-Bremse, insbesondere zur Durchführung des voranstehend erläuterten Verfahrens, mit einem Vorratstank für Hydraulikflüssigkeit, welche über mindestens eine Pumpe, zumindest ein Steuerventil und ein Schaltorgan zumindest einer Federspeicher-Bremse zuführbar ist, wobei das Steuerventil in einer ersten Ventilstellung die mindestens eine Bremse mit der mindestens einen Pumpe und in einer zweiten Ventilstellung unter Umgehung der Pumpe mit dem Vorratstank verbindet, und mit einer Quelle für unter Druck gesetzte Hydraulikflüssigkeit, welche bei einem Ausfall der Pumpe der mindestens einen Bremse zuführbar ist, wobei das Schaltorgan bei Ausfall der Pumpe ausgehend von einer Durchlaßstellung in eine Sperrstellung überführbar ist, in der es die Verbindung zwischen der mindestens einen Bremse und dem Steuerventil absperrt.

Um die hydraulische Schaltung derart weiterzubilden, daß die Gefahr eines Unfalls nach einem Ausfall des Bremslösedruckes vermindert wird, wird erfindungsgemäß vorgeschlagen, daß das Schaltorgan bei erneutem Einsatz der Pumpe in Abhängigkeit vom Druck der von der Pumpe geförderten Hydraulikflüssigkeit selbsttätig von seiner Sperrstellung in seine Durchlaßstellung rückstellbar ist. Während des Normalbetriebs der Pumpe kann die mindestens eine Federspeicher-Bremse mittels des Steuerventils gesteuert werden. Dieses nimmt zum Lösen der Bremse seine erste Ventilstellung ein, so daß von der Pumpe unter Druck gesetzte Hydraulikflüssigkeit der Bremse zugeführt werden kann. Soll mittels der Bremse ein zugeordnetes Rad arretiert werden, so ist es hierzu lediglich erforderlich, das Steuerventil in seine zweite Schaltstellung zu überführen, in der die Bremse mit dem Vorratstank für Hydraulikflüssigkeit verbunden ist und daher Hydraulikflüssigkeit von der Bremse in den Vorratstank abfließen kann unter der Wirkung der Federkraft des Federspeichers. Zum erneuten Lösen der Bremse wird dann das Steuerventil wieder in seine erste Schaltstellung überführt.

Kommt es bei einer Störung zum Ausfall der Pumpe, so ist ein ordnungsgemäßes Lösen der mindestens einen Federspeicher-Bremse nicht mehr möglich. In diesem Falle kann das Schaltorgan aus seiner Durchlaßstellung in seine Sperrstellung überführt werden, die mindestens eine Bremse kann anschließend von der Druckquelle mit unter Druck gesetzter Hydraulikflüssigkeit beaufschlagt werden, wobei durch die Sperrstellung des Schaltorganes sichergestellt ist, daß die unter Druck gesetzte Hydraulikflüssigkeit nicht über das Steuerventil in den Vorratstank gelangen kann. Ist die Pumpe wieder funktionsfähig, so wird mittels der Pumpe im Bereich vor dem Steuerventil der Bremslösedruck wieder aufgebaut, und dies hat erfindungsgemäß zur Folge, daß das Schaltorgan selbsttätig wieder seine Durchlaßstellung einnimmt, so daß die Steuerung der mindestens einen Federspeicher-Bremse wieder mit Hilfe des Steuerventils erfolgen kann.

Günstig ist es, wenn das Steuerventil als elektrisch betätigbares und mit einer Feder rückstellbares Wegeventil ausgestaltet ist, insbesondere als 3/2-Wegeventil. Durch elektrische Betätigung kann das Steuerventil entgegen der Wirkung einer Rückstellkraft in eine Ventilstellung überführt werden, in der die Bremse mit der mindestens einen Pumpe in Strömungsverbindung steht und folglich gelöst werden kann. Wird die Spannungsversorgung des elektrischen Wegeventils unterbrochen, so geht dieses aufgrund der einwirkenden Federkraft selbsttätig in seine zweite Ventilstellung über, in der die Bremse mit dem Vorratstank in Verbindung steht und von der Pumpe abgetrennt ist.

Bei einer bevorzugten Ausführungsform der hydraulischen Schaltung ist das Schaltorgan als manuell betätigbares und hydraulisch rückstellbares Wegeventil ausgestaltet. Wie bereits erläutert, hat dies den Vorteil, daß bei einem Ausfall des Bremslösedruckes das Schaltorgan manuell betätigt werden kann und daß es bei erneuter Bereitstellung des Bremslösedruckes von diesem unmittelbar in seine Durchlaßstellung zurückgesetzt wird. Vorzugsweise ist die Quelle für unter Druck gesetzte Hydraulikflüssigkeit als Handpumpe ausgestaltet. Mittels der Handpumpe kann bei einem Servicebetrieb die Bremse manuell gelöst werden.

Die nachfolgende Beschreibung einer bevorzugten Ausführungsform der Erfindung dient im Zusammenhang mit der Zeichnung der näheren Erläuterung. Es zeigen:
- Figur 1:: ein Blockschema einer hydraulischen Schaltung mit einer oder mehreren Federspeicher-Bremsen, einem Bremslösedruck-Versorgungskreis und einer dazwischen geschalteten Vorrichtung zum Lösen der Bremsen;
- Figur 2:: eine schematische Seitenansicht der Vorrichtung zum Lösen der Bremsen aus Figur 1;
- Figur 3:: eine schematische Draufsicht der Vorrichtung zum Lösen der Bremsen aus Figur 1;
- Figur 4:: eine schematische Rückansicht der Vorrichtung zum Lösen der Bremsen aus Figur 1.

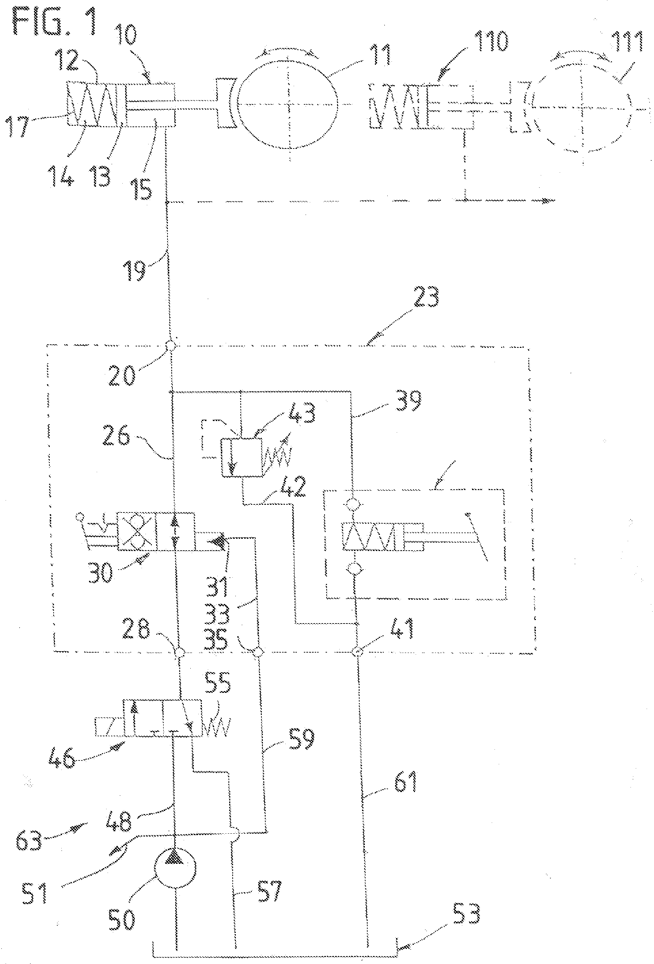

In Figur 1 ist schematisch eine erfindungsgemäße hydraulische Schaltung dargestellt mit einer Federspeicher-Bremse 10, die mit einem Rad 11 zusammenwirkt, das in üblicher und deshalb in der Zeichnung nicht dargestellter Weise von einem hydrostatischen Fahrantrieb in Drehung versetzbar ist. Es kann sich beispielsweise um ein Antriebsrad einer fahrbaren Baumaschine handeln. Alternativ kann die Federspeicher-Bremse 10 auch auf eine Antriebswelle, eine Achse oder sonstige bewegbare Elemente einwirken. Außerdem kann vorgesehen sein, daß die Federspeicher-Bremse 10 auf mehrere Räder, Antriebswellen etc. einwirkt. Die hydraulische Schaltung kann auch noch weitere Federspeicher-Bremsen aufweisen, wie sie am Beispiel einer gestrichelt dargestellten Federspeicher-Bremse 110 in Figur 1 illustriert sind. Sämtliche Federspeicher-Bremsen 10 und 110 sind miteinander verbunden und wirkungsgleich ausgestaltet.

Die Federspeicher-Bremse 10 weist ebenso wie die Federspeicher-Bremse 110 einen Zylinder 12 auf, in dem ein Kolben 13 verschiebbar gelagert ist. Durch den Kolben 13 wird der Innenraum des Zylinders 12 in einen hinteren Zylinderraum 14 und einen vorderen Zylinderraum 15 unterteilt. Im hinteren Zylinderraum 14 ist ein Federspeicher in Form einer Druckfeder 17 angeordnet, die den Kolben 13 mit einer Federkraft in Richtung auf den vorderen Zylinderraum 12 beaufschlagt. Der vordere Zylinderraum 15 steht über eine Versorgungsleitung 19 mit einem Druckauslaß 20 einer insgesamt mit dem Bezugszeichen 23 belegten Vorrichtung zum Lösen der Bremse 10 in Strömungsverbindung. Die Vorrichtung 23 weist einen Verbindungskanal 26 auf, über den der Druckauslaß 20 mit einem Druckeinlaß 28 in Strömungsverbindung steht, und in den Verbindungskanal 26 ist ein Schaltorgan in Form eines manuell betätigbaren und hydraulisch rückstellbaren Sperrventils 30 geschaltet. Das Sperrventil 30 weist einen Steuereingang 31 auf, der über einen Steuerkanal 33 mit einem Steuereinlaß 35 der Vorrichtung 23 in Strömungsverbindung steht.

Die Vorrichtung 23 umfaßt außerdem eine Quelle für unter Druck gesetzte Hydraulikflüssigkeit in Form einer Handpumpe 37, die über einen Zufuhrkanal 39 mit dem Verbindungskanal 26 in Strömungsverbindung steht, wobei der Zufuhrkanal 39 im Bereich zwischen dem Sperrventil 30 und dem Druckauslaß 20 in den Verbindungskanal 26 einmündet. Der Zufuhrkanal 39 erstreckt sich bis zu einem Tankanschluß 41 der Vorrichtung 23. Parallel zur Handpumpe 37 verläuft ein Umgehungskanal 42, in den ein Druckbegrenzungsglied in Form eines Druckbegrenzungsventils 43 geschaltet ist. Die in Figur 1 dargestellte hydraulische Schaltung weist außerdem ein Steuerventil 46 auf, das in eine Zulaufleitung 48 geschaltet ist. Die Zulaufleitung 48 verbindet eine Pumpe 50 mit dem Druckeinlaß 28 der Vorrichtung 23 und erstreckt sich saugseitig der Pumpe 50 bis zu einem Vorratstank 53 für Hydraulikflüssigkeit.

Das Steuerventil 46 ist als elektrisch betätigtes und mittels einer Feder 55 rückstellbares 3/2-Wegeventil ausgebildet, das in einer ersten Ventilstellung die Federspeicher-Bremse 10 sowie die Federspeicher-Bremse 110 mit der Pumpe 50 verbindet und das in einer zweiten Ventilstellung, wie in Figur 1 dargestellt, die Federspeicher-Bremsen 10, 110 über eine Rücklaufleitung 57 mit dem Vorratstank 53 verbindet. Die Pumpe 50 steht über eine Zweigleitung 59 mit dem Steuereinlaß 35 in Strömungsverbindung, wobei die Zweigleitung 59 das Steuerventil 46 umgeht und somit eine direkte Verbindung bereitstellt zwischen dem Steuereinlaß 35 der Vorrichtung 23 und der Pumpe 50. Druckseitig sind an die Pumpe 50 über eine Anschlußleitung 51 an sich bekannte und deshalb in der Zeichnung nicht dargestellte Verbraucher angeschlossen, beispielsweise eine hydraulische Vorsteuerung für die Baumaschine, ein Lenkkreis und/oder eine Druckabsicherung. Der Tankanschluß 41 der Vorrichtung 23 ist über eine Tankleitung 61 mit dem Vorratstank 53 verbunden.

Im Normalbetrieb können die Federspeicher-Bremsen 10 und 110 vom Steuerventil 46 gesteuert werden dergestalt, daß das Steuerventil 46 zum Arretieren des mindestens einen Rades 11 sowie des zumindest einen Rades 111, auf das die Federspeicher-Bremse 110 einwirkt, elektrisch in seine zweite Ventilstellung überführt wird, in der die Federspeicher-Bremsen 10 und 110 über die Versorgungsleitung 19, den Verbindungskanal 26, das Steuerventil 46 und die Rücklaufleitung 57 mit dem Vorratstank 53 verbunden sind, so daß Hydraulikflüssigkeit aus den vorderen Zylinderräumen 15 zum Vorratstank 13 fließen kann und die Federspeicher-Bremsen 10, 110 unter der Wirkung ihrer Druckfedern 17 die Räder 11, 111 arretieren. Sollen die Federspeicher-Bremsen 10, 110 im Normalbetrieb gelöst werden, so wird hierzu das Steuerventil 46 in seine erste Ventilstellung überführt, in der es die Strömungsverbindung zwischen der Pumpe 50 und den Federspeicher-Bremsen 10, 110 freigibt, so daß den vorderen Zylinderräumen 15 unter Druck gesetzte Hydraulikflüssigkeit zugeführt werden kann und folglich die Federspeicher-Bremsen 10, 110 entgegen der Wirkung ihrer Druckfeder 17 gelöst werden.

Kommt es bei einer Störsituation zu einem Ausfall der Pumpe 50, so fällt der Druck in den vorderen Zylinderräumen 15 ab und die Federspeicher-Bremsen 10, 110 gehen selbständig in ihre Bremsstellung über, so daß die Räder 11, 111 arretiert werden. Sollen nun die Federspeicher-Bremsen 10, 110 im Servicebetrieb gelöst werden, so kann hierzu mittels des Sperrventils 30 die Verbindung zwischen den Federspeicher-Bremsen 10, 110 und dem Steuerventil 46 unterbrochen werden, indem das Sperrventil 30 manuell in seine zweite Schaltstellung überführt wird. Es kann dann mittels der Handpumpe 37 Hydraulikflüssigkeit aus dem Vorratstank 43 zu den vorderen Zylinderräumen 15 befördert werden zum Belüften der Federspeicher-Bremsen 10, 110. Dies gibt die Möglichkeit, beispielsweise eine fahrbare Arbeitsmaschine, die die in Figur 1 dargestellte Hydraulikschaltung aufweist, bei Ausfall des Antriebssystems abzuschleppen. Wird anschließend das Antriebssystem wieder instand gesetzt, so kann mittels der Pumpe 50 Hydraulikflüssigkeit aus dem Vorratstank 53 wieder unter Druck gesetzt werden. Dies hat zur Folge, daß der Steuereingang 31 des Sperrventils 30 über die Zweigleitung 59 und den Steuerkanal 33 mit Druck beaufschlagt wird und darauf das Sperrventil 30 selbsttätig ausgehend aus seiner zweiten Schaltstellung wieder in seine erste Schaltstellung übergeht. Somit kann durch Bereitstellung des Bremslösedruckes in dem durch die Pumpe 50 und das Steuerventil 46 gebildeten Bremslösedruck-Versorgungskreis 63 eine selbsttätige Rückstellung des Steuerventils 30 sichergestellt werden. Eine manuelle Rückstellung des Steuerventils 30 ist nicht erforderlich. Damit steht nach einer Instandsetzung der Pumpe 50 zur Steuerung der Federspeicher-Bremsen 10, 110 automatisch wieder das Steuerventil 46 zur Verfügung.

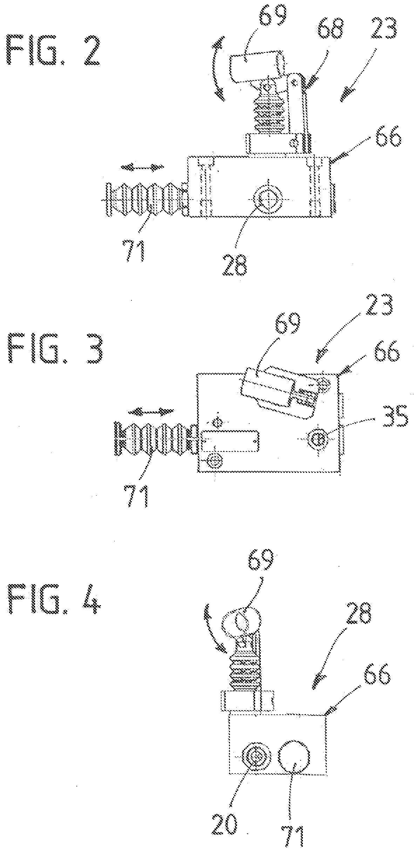

In den Figuren 2, 3 und 4 ist die Vorrichtung 23 zum Lösen der Federspeicher-Bremsen 10, 110 in einer Seitenansicht, einer Draufsicht und einer Rückansicht dargestellt. Die Vorrichtung 23 ist als Steuerblock ausgebildet und weist ein quaderförmiges Gehäuse 66 auf, das die Handpumpe 37 und das Sperrventil 30 aufnimmt. Oberseitig ist am Gehäuse 66 ein Hebelwerk 68 zur Betätigung der Handpumpe 37 gelagert, wobei das Hebelwerk 68 eine Hülse 69 aufweist, in die zur Betätigung der Handpumpe 37 ein in der Zeichnung nicht dargestellter Schwenkhebel eingesetzt werden kann. Seitlich ist am Gehäuse 66 ein Schieber oder Stößel 71 in seiner Längsrichtung verschiebbar gehalten. Mittels des Stößels 71 kann das Sperrventil 30 manuell ausgehend von seiner ersten in seine zweite Schaltstellung überführt werden. Der Stößel 71 kann hierbei in der zweiten Schaltstellung gehalten werden und wird bei Beaufschlagung des Steuereingangs 31 mit dem bei ordnungsgemäßen Betrieb der Pumpe 50 im Bremslösedruck-Versorgungskreis 63 herrschenden Bremslösedruck selbsttätig in seine ursprüngliche Position zurückverschoben. Oberseitig ist am Gehäuse 66 der Steuereinlaß 35 angeordnet, und an einer Längsseite weist das Gehäuse 66 den Druckeinlaß 28 auf. Der Druckauslaß 20 ist seitlich neben dem Stößel 71 positioniert. Der Tankanschluß 41 der Vorrichtung 23 befindet sich auf der dem Druckeinlaß 28 abgewandten Seite des Gehäuses 66 und ist daher in den Figuren 2, 3 und 4 nicht dargestellt.

Die Vorrichtung 23 zum Lösen der Federspeicher-Bremsen 10, 110 ist als kompakte Baueinheit ausgestaltet und ermöglicht es im Falle einer Störsituation auf einfache Weise die Federspeicher-Bremsen 10, 110 zu lösen, wobei sichergestellt ist, daß bei erneuter Bereitstellung des Bremslösedruckes selbsttätig die Verbindung zwischen den Federspeicher-Bremsen 10, 110 und dem Steuerventil 46 bereitgestellt wird, indem das Sperrventil 30 in Abhängigkeit von dem im Bremslösedruck-Versorgungskreis 63 herrschenden Druck automatisch in seine erste Schaltstellung zurückgesetzt wird.

## Patentansprüche

1. Verfahren zum Lösen von mindestens einer mittels eines Druckmittels betätigbaren Federspeicher-Bremse (10), wobei die mindestens eine Bremse (10) im Normalbetrieb an einen Bremslösedruck-Versorgungskreis (63) angeschlossen ist zur Beaufschlagung der Bremse (10) mit einem Bremslösedruck, und wobei die mindestens eine Bremse (10) im Servicebetrieb bei Ausfall des Bremslösedruckes vom Bremslösedruck-Versorgungskreis (63) abgetrennt und mittels einer Druckmittelquelle (37) entgegen der Federkraft des Federspeichers gelöst wird, ***dadurch gekennzeichnet,* daß** die mindestens eine Bremse (10) nach einem Servicebetrieb bei erneuter Bereitstellung des Bremslösedruckes selbsttätig wieder mit dem Bremslösedruck-Versorgungskreis (63) verbunden wird.

2. Verfahren nach Anspruch 1, ***dadurch gekennzeichnet,* daß** die mindestens eine Bremse (10) über ein Schaltorgan (30) an den Bremslösedruck-Versorgungskreis (63) angeschlossen wird, wobei das Schaltorgan (30) eine erste Schaltstellung, in der die mindestens eine Bremse (10) mit dem Bremslösedruck-Versorgungskreis (63) verbunden ist, und eine zweite Schaltstellung, in der die mindestens eine Bremse (10) vom Bremslösedruck-Versorgungskreis (63) abgetrennt ist, aufweist, und wobei das Schaltorgan (30) im Servicebetrieb in die zweite Schaltstellung überführt wird und in Abhängigkeit von dem im Bremslösedruck-Versorgungskreis (63) herrschenden Druck selbsttätig wieder in die erste Schaltstellung zurückgesetzt wird.

3. Verfahren nach Anspruch 2, ***dadurch gekennzeichnet,* daß** das Schaltorgan (30) im Servicebetrieb manuell in die zweite Schaltstellung überführt wird.

4. Verfahren nach Anspruch 2 oder 3, ***dadurch gekennzeichnet,* daß** als Schaltorgan ein hydraulisch rückstellbares Wegeventil (30) verwendet wird.

5. Vorrichtung zum Lösen von mindestens einer mittels eines Druckmittels betätigbaren Federspeicher-Bremse (10), mit einem Schaltorgan (30), über das die mindestens eine Bremse (10) zur Beaufschlagung mit einem Bremslösedruck an einen Bremslösedruck-Versorgungskreis (63) anschließbar ist, wobei das Schaltorgan (30) eine erste Schaltstellung, in der die mindestens eine Bremse (10) mit dem Bremslösedruck-Versorgungskreis (63) verbindbar ist, und eine zweite Schaltstellung, in der die mindestens eine Bremse (10) vom Bremslösedruck-Versorgungskreis (63) abtrennbar ist, aufweist, insbesondere zur Durchführung des Verfahrens nach einem der Ansprüche 1 bis 4, ***dadurch gekennzeichnet,* daß** das Schaltorgan (30) in Abhängigkeit von dem im Bremslösedruck-Versorgungskreis (63) herrschenden Druck selbsttätig aus der zweiten Schaltstellung in die erste Schaltstellung zurücksetzbar ist.

6. Vorrichtung nach Anspruch 5, ***dadurch gekennzeichnet,* daß** das Schaltorgan (30) manuell von der ersten Schaltstellung in die zweite Schaltstellung überführbar ist.

7. Vorrichtung nach Anspruch 5 oder 6, ***dadurch gekennzeichnet,* daß** das Schaltorgan (30) hydraulisch aus der zweiten Schaltstellung in die erste Schaltstellung rückstellbar ist.

8. Vorrichtung nach Anspruch 7, ***dadurch gekennzeichnet,* daß** das Schaltorgan ein manuell betätigbares und hydraulisch rückstellbares Wegeventil (30) ist.

9. Vorrichtung nach einem der Ansprüche 5 bis 8, ***dadurch gekennzeichnet,* daß** die Vorrichtung (23) einen Druckeinlaß (28) zum Anschluß an ein Steuerventil (46) des Bremslösedruck-Versorgungskreises (63) und einen Druckauslaß (20) zum Anschluß an die mindestens eine Federspeicher-Bremse (10) aufweist, wobei der Druckeinlaß (28) über einen Verbindungskanal (26) mit dem Druckauslaß (20) verbunden ist und in den Verbindungskanal (26) das Schaltorgan (30) geschaltet ist, und daß die Vorrichtung (23) einen Steuereinlaß (35) aufweist, der mit einem Steuereingang (31) des Schaltorgans (30) verbunden ist und der an den Bremslösedruck-Versorgungskreis (63) anschließbar ist.

10. Vorrichtung nach Anspruch 9, ***dadurch gekennzeichnet,* daß** die Vorrichtung (23) einen Zufuhrkanal (39) aufweist, wobei im Falle eines Servicebetriebs die mindestens eine Bremse (10) über den Zufuhrkanal (39) mit einer Druckmittelquelle (37) verbindbar ist.

11. Vorrichtung nach Anspruch 10, ***dadurch gekennzeichnet,* daß** der Zufuhrkanal (39) im Bereich zwischen dem Schaltorgan (30) und dem Druckauslaß (20) in den Versorgungskanal (26) einmündet.

12. Vorrichtung nach Anspruch 10 oder 11, ***dadurch gekennzeichnet,* daß** die Vorrichtung (23) die Druckmittelquelle (37) umfaßt.

13. Vorrichtung nach Anspruch 12, ***dadurch gekennzeichnet,* daß** die Druckmittelquelle (37) manuell betätigbar ist.

14. Vorrichtung nach Anspruch 12 oder 13, ***dadurch gekennzeichnet,* daß** die Vorrichtung (23) einen Tankanschluß (41) aufweist zum Anschluß an einen Druckmittel-Vorratstank (53), wobei sich an den Tankanschluß (41) der Zufuhrkanal (39) anschließt und in den Zufuhrkanal (39) die Druckmittelquelle in Form einer Hilfspumpe (37) geschaltet ist.

15. Vorrichtung nach Anspruch 14, ***dadurch gekennzeichnet,* daß** parallel zur Hilfspumpe (37) ein Druckbegrenzungsglied (43) geschaltet ist.

16. Hydraulische Schaltung zum Lösen von mindestens einer mittels eines Druckmittels lösbaren Federspeicher-Bremse, insbesondere zur Durchführung des Verfahrens nach einem der Ansprüche 1 bis 4, mit einem Vorratstank (43) für Hydraulikflüssigkeit, welche über mindestens eine Pumpe (50), zumindest ein Steuerventil (46) und ein Schaltorgan (30) zumindest einer Federspeicher-Bremse (10) zuführbar ist, wobei das Steuerventil (46) in einer ersten Ventilstellung die mindestens eine Bremse (10) mit der mindestens einen Pumpe (50) und in einer zweiten Ventilstellung unter Umgehung der mindestens einen Pumpe (50) mit dem Vorratstank (53) verbindet, und mit einer Quelle (37) für unter Druck gesetzte Hydraulikflüssigkeit, welche bei einem Ausfall der Pumpe (50) der mindestens einen Bremse (10) zuführbar ist, wobei das Schaltorgan (30) bei Ausfall der Pumpe (50) ausgehend von einer Durchlaßstellung in eine Sperrstellung überführbar ist, in der es die Verbindung zwischen der mindestens einen Bremse (10) und dem Steuerventil (46) absperrt, **dadurch gekennzeichnet, daß** das Schaltorgan (30) in Abhängigkeit vom Druck der von der Pumpe (50) geförderten Hydraulikflüssigkeit selbsttätig von seiner Sperrstellung in seine Durchlaßstellung rückstellbar ist.

17. Hydraulische Schaltung nach Anspruch 16, ***dadurch gekennzeichnet,* daß** das Steuerventil als elektrisch betätigbares und mit einer Feder (55) rückstellbares Wegeventil (46) ausgestaltet ist.

18. Hydraulische Schaltung nach Anspruch 16 oder 17, ***dadurch gekennzeichnet,* daß** das Schaltorgan als manuell betätigbares und hydraulisch rückstellbares Wegeventil (30) ausgestaltet ist.

19. Hydraulische Schaltung nach Anspruch 16, 17 oder 18, ***dadurch gekennzeichnet,* daß** die Quelle für unter Druck gesetzte Hydraulikflüssigkeit als Handpumpe (37) ausgestaltet ist.

## Claims

1. A method for releasing at least one spring accumulator brake (10), which is operated by a pressure medium, wherein in normal operation, said at least one brake (10) is connected to a brake-release-pressure supply-circuit (63) for releasing of the brake (10) by a brake release pressure, and wherein in service operation, when the brake release pressure fails, said at least one brake (10) is separated from the circuit (63) and is released by an auxiliary pressure medium source (37) against the force of the spring accumulator, ***characterized in that*** the at least one spring accumulator brake (10), after a service operation, for the renewed establishment of the brake releasing pressure, is being connected automatically to the brake-release-pressure supply-circuit (63).

2. Method according to claim 1, ***characterized in that*** the at least one brake (10) is connected via a switch organ (30) to the brake-release-pressure supply-circuit (63), whereby this switch organ (30) comprises a first switch position in which the at least one brake (10) is connected to the brake-release-pressure supply-circuit (63), and a second switch position, in which the at least one brake (10) is separated from the brake-release-pressure supply-circuit (63), and whereby the switch organ (30) in the service operation is put into the second switch position and depending on the acting pressure in the brake-release-pressure supply-circuit (63) is being reset back into the first switch position automatically.

3. The method as claimed in claim 2, ***characterized in that**,* in the service operation, the switch organ (30) is being switched over to the second setting position manually.

4. The method as claimed in claim 2, ***characterized in that*** a hydraulically resetable way valve (30) is being used as the switch organ.

5. An apparatus for releasing at least one spring accumulator brake (10) which is actuated by a pressure medium, comprising a switch organ (30) by which the at least one brake (10), for impinging a brake relasing pressure, is connectable to a brake-release-supply circuit (63), whereby the switch organ (30) has a first setting position in which it connects said at least one spring accumulator brake (10) with the brake-release-supply circuit (63), and a second setting position in which the at least one spring accumulator brake (10) is separable from the brake-release-supply circuit (63), in particular for executing the method according to one of claims 1 to 4, ***characterized in that*** the switch organ (30), depending on the acting pressure in the brake-release-supply circuit (63), is automatically resetable from the second switch position back into the first switch position.

6. Apparatus according to claim 5, ***characterized in that*** the switch organ (30) is manually switchable from the first setting position into the second setting position.

7. Apparatus according to claim 5 or 6, ***characterized in that*** the switch organ (30) is hydraulically resetable from the second setting position into the first setting position.

8. Apparatus according to claim 7, ***characterized in that*** the switch organ (30) is a manually swichable and hydraulically resetable switch organ (30).

9. Apparatus according to one of claims 5 to 8, ***characterized in that*** the apparatus (23) comprises a pressure inlet port (28) for connection to the control valve (46) of the brake-release-pressure supply-circuit (63) and the pressure outlet port (20) for connection to the at least one brake (10), wherein the pressure inlet port (28) is connected with the pressure outlet port (20) via the connection channel (26), and the switch organ (30) is connected in the connection channel (26) and that the apparatus has a control inlet (35) which is connected with a control entry (31) of the switch organ (30) and which is capable of being connected to the brake-release-pressure supply-circuit (63).

10. Apparatus according to claim 9, ***characterized in that*** the apparatus (23) has a delivery channel (39), whereby in case of a service operation, said at least one brake (10) is connectable via th delivery channel (39) to an auxiliary pressure medium source (37).

11. Apparatus according to claim 10, ***characterized in that*** the delivery channel (39) joins with the connection channel (19) in the zone between the switch organ (30) and the pressure outlet port (20).

12. Apparatus according to claim 10 or 11, ***characterized in that*** the apparatus (23) comprises a pressure medium source (37).

13. Apparatus according to claim 12, ***characterized in that*** pressure medium source (37) is operated manually.

14. Apparatus according to claim 12 or 13, ***characterized in that*** the apparatus (23) has a tank connector (41) for a connection to a pressure medium-feeder tank (53), wherein the delivery channel (39) is following the tank connector (41) and into the delivery channel (39) and is connected to the pressure medium source in form of an auxiliary pump (37).

15. Apparatus according to claim 14, ***characterized in that*** a pressure limiting part is connected parallel to the auxiliary pump (37).

16. A hydraulic circuit for releasing at least one spring accumulator brake, in particular for executing the method according to one of claims 1 to 4, with a feeder tank (53) for holding a hydraulic fluid which can be fed by a pump (5), at least a control valve (46) and a switch organ (30) to that at least one spring-accumulator brake (10), whereby the control control valve (46) in a first valve position is connecting the at least one brake (10) with the at least one pump (50) and in a second valve position, by circumventing the at least one pump (50) with the feeder thank (53), and with a source (37) for pressurized hydraulic liquid which, in case of failure of the pump (50), is feedable to the at least one brake (10) whereby the switch organ (30), in case of failure of the pump (50), starting from an open position, is switchable to a blocking position in which it blocks the connection between the at least one brake (10) and the control valve (46), ***characterized in that*** the switch organ (30), depending on the pressure of the hydraulic liquid fed by the pumpe (50), is automatically resetable from its blocking position to its open position.

17. Hydraulic circuit according to claim 16, ***characterized in that*** the control valve is configured as a way valve (46) which is electrically operated and is resetable by a spring (55).

18. Hydraulic circuit according to claim 16 or 17, ***characterized in that*** the control valve is manually operated and is capable of being restored hydraulically.

19. Hydraulic circuit according to claim 16, 17 or 18, ***characterized in that*** the source for pressurized hydraulic liquid is configured as hand pump (37).

## Revendications

1. Procédé pour libérer au moins un frein (10) comportant un réservoir à ressort susceptible d'être actionné par au moins un moyen de pression, où au moins un frein (10) est connecté pendant le service normal à un circuit (63) d'alimentation, destiné à établir la pression, pour libérer le frein, ledit frein (10) étant sollicité par ladite pression pour libérer le frein, où au moins un frein (10) est séparé pendant le service du circuit (63) d'alimentation, destiné à établir la pression, pour libérer le frein et où au moins un frein est séparé au moyen d'une source de moyens de pression (37) contre la force du ressort du réservoir à ressort, **caractérisé en ce que** au moins un frein (10) est connecté automatiquement selon le fonctionnement de service lors d'une nouvelle mise à disposition de la pression destinée à libérer le frein à nouveau avec le circuit (63) d'alimentation, destiné à établir la pression, pour libérer le frein.

2. Procédé selon la revendication 1, **caractérisé en ce qu'**au moins un frein (10) est connecté par au moins un dispositif de commutation (30) au circuit (63) d'alimentation, destiné à établir la pression, pour libérer le frein, où le dispositif de commutation (30) comporte une première position de commutation, dans laquelle au moins un frein (10) est connecté au circuit (63) d'alimentation, destiné à établir la pression, pour libérer le frein et une deuxième position de commutation dans laquelle au moins un frein (10) est séparé du circuit (63) d'alimentation, destiné à établir la pression, pour libérer le frein, et où le dispositif de commutation (30) passe pendant le fonctionnement de service vers la deuxième position de commutation et où ledit dispositif de commutation est reppelé automatiquement en fonction de la pression régnant dans le circuit (63) d'alimentation, destiné à établir la pression, pour libérer le frein, vers la deuxième position de commutation.

3. Procédé selon la revendication 2, **caractérisé en ce que** le dispositif de commutation (30) est passé pendant le fonctionnement de service manuellement vers la deuxième position de commutation.

4. Procédé selon les revendications 2 ou 3, **caractérisé en ce qu'**on utilise comme dispositif de commutation une valve de distribution (30) susceptible d'être hydrauliquement rappelé.

5. Dispositif pour libérer au moins un frein (10) comportant un réservoir à ressort (10) actionnable par au moins un moyen de pression, avec un dispositif de commutation (30) par lequel on peut connecter au moins un frein (10) pour solliciter le circuit (63) d'alimentation, destiné à établir la pression, pour libérer le frein, où le dispositif de commutation (30) comporte une première position de commutation, dans laquelle au moins un frein (10) est connectable au circuit (63) d'alimentation, destiné à établir la pression, pour libérer le frein et une deuxième position de commutation dans laquelle au moins un frein (10) est séparable du circuit (63) d'alimentation, destiné à établir la pression, pour libérer le frein, notamment pour effectuer le procédé selon une des revendications 1 à 4, **caractérisé en ce que** le dispositif de commutation (30) peut être rappelé automatiquement en fonction de la pression régnant dans le circuit (63) d'alimentation, destiné à établir la pression, pour libérer le frein, vers la deuxième position de commutation.

6. Dispositif selon la revendication 5, **caractérisé en ce que** le dispositif de commutation (30) peut être passé manuellement de la première position de commutation vers la deuxième position de commutation.

7. Dispositif selon les revendications 5 et 6, **caractérisé en ce que** le dispositif de commutation (30) peut être remis hydrauliquement de la deuxième position de commutation vers la première position de commutation.

8. Dispositif selon la revendication 7, **caractérisé en ce que** le dispositif de commutation est une valve de distribution (30) manuellement actionnable et pouvant être rappelé hydrauliquement.

9. Dispositif selon une des revendications 5 à 8 **caractérisé en ce que** le dispositif (23) comporte une entrée de pression (28) pour une connection à une valve de commande 46 du circuit (63) d'alimentation, destiné à établir la pression, pour libérer le frein, et une sortie de pression (20) pour une connexion à au moins un frein comportant un réservoir à ressort (10), où l'entrée de pression (28) est connectée à la sortie de pression (20) par un canal de connexion et le dispositif de commutation (30) est connecté dans le canal de connexion, et **en ce que** le dispositif (23) comporte une entrée de pression (35) qui est connectée à l'entrée de commande (31) du dispositif de commutation (30) et qui peut être connectée au circuit (63) d'alimentation, destiné à établir la pression, pour libérer le frein.

10. Dispositif selon la revendication 9, **caractérisé en ce que** le dispositif (23) comporte un canal d'alimentation (39), où au moins un frein (10) est susceptible d'être connecté dans le cas d'un fonctionnement de service par le canal d'alimentation (39) à la source de moyens de pression (37).

11. Dispositif selon la revendication 10, **caractérisé en ce que** le canal d'alimentation (39) débouche dans la zone entre le dispositif de commutation (30) et la sortie de pression (20) dans le canal d'alimentation (26).

12. Dispositif selon les revendications 10 et 11, **caractérisé en ce que** le dispositif (23) comporte une source de moyens de pression (37).

13. Dispositif selon la revendication 12, **caractérisé en ce que** la source de moyens de pression (37) peut être actionnée manuellement.

14. Dispositif selon la revendication 12 ou 13, **caractérisé en ce que** le dispositif (23) comporte une connexion de réservoir (41) pour une connexion à un réservoir de réserve (53) pour le moyen de pression et où la source de moyens de pression est connectée au canal d'alimentation (39) sous la forme d'une pompe de secours (37).

15. Dispositif selon la revendication 14, **caractérisé en ce qu'**un élément de limitation de pression (43) est connecté parallèlement à la pompe de secours (37).

16. Connexion hydraulique pour libérer au moins un frein comportant un réservoir à ressort susceptible d'être libéré par un moyen de pression, notamment pour effectuer le dispositif selon une des revendications 1 à 4, comportant un réservoir pour le liquide hydraulique, lequel liquide peut être amené par au moins une pompe (50), au moins une valve de commande (46) et un dispositif de commutation (30) d'au moins un frein (10) à réservoir à ressort, où la valve de commande (46) connecte dans une première position de valve au moins un frein (10) avec au moins une pompe (50) et connecte le réservoir (53) dans une deuxième position de valve contourne au moins une pompe (50), et où ladite valve de commande (46) peut être reliée avec une source (37) pour le liquide hydraulique sous pression, lequel liquide peut être amené lors d'une défaillance de la pompe (50) d'au moins un frein (10), où le dispositif de commutation (30) peut être, lors d'une défaillance de la pompe (50), modifié à partir d'une position de passage vers une position d'arrêt dans laquelle la connexion entre au moins un frein (10) et la valve de commande (46) est interrompue, **caractérisé en ce que** le dispositif de commutation (30) est susceptible d'être rappelé automatique vers sa position de passage en fonction de la pression du liquide hydraulique transporté par la pompe (50).

17. Connexion hydraulique selon la revendication 16, **caractérisé en ce que** la valve de commande est réalisée sous la forme d'un distributeur à valve (46) actionnable électriquement et susceptible d'être rappelé au moyen d'un ressort (55).

18. Connexion hydraulique selon la revendication 16 ou 17, **caractérisé en ce que** le dispositif de commutation est réalisé comme un distributeur à valve (30) manuellement actionnable et susceptible d'être hydrauliquement rappelé.

19. Connexion hydraulique selon la revendication 16, 17 ou 18, **caractérisé en ce que** la source pour un liquide hydraulique mis sous pression peut être réalisée comme une pompe manuelle (37).
